# FASCICULE DE BREVET EUROPEEN

(11) **EP 1 096 630 B1**
(45) Date de publication et mention de la délivrance du brevet: **18.05.2011**
(21) Numéro de dépôt: 00402803.1
(22) Date de dépôt: 11.10.2000
(51) Int. Cl.: H02G 3/12, H02G 3/30, H02G 3/04

(54) **Support pour appareillage, en particulier pour appareillage électrique, à rapporter sur le socle d'une goulotte**
Träger für ein Gerät, inbesondere für ein elektrisches Gerät, zur Befestigung auf einem Kabelkanalkörper
Support for an apparatus, especially an electrical apparatus, to be mounted in a cable duct

(30) Priorité: 15.10.1999 FR 9912920
(43) Date de publication de la demande: 02.05.2001
(73) Titulaire: Legrand France, 87000 Limoges (FR); Legrand SNC, 87000 Limoges (FR)
(72) Inventeur: Adam, Damien, 72240 Saint Symphorien (FR); Decore, Bertrand, 72650 La Chapelle Saint Aubin (FR)
(74) Mandataire: Santarelli

(56) Documents cités:
- FR-A- 2 741 755
- FR-A- 2 776 134

## Description

La présente invention concerne d'une manière générale les dispositifs de support mis en oeuvre pour rapporter transversalement un appareillage sur un socle de goulotte de l'une à l'autre des deux parois longitudinales de celui-ci, qu'il s'agisse des ailes latérales de ce socle de goulotte ou qu'il s'agisse de l'une ou l'autre des cloisons internes qu'il peut éventuellement comporter pour une fragmentation de son volume interne en deux ou plusieurs compartiments, et elle vise, plus particulièrement, le cas où cet appareillage est un appareillage électrique, tel que par exemple un socle de prise de courant.

En particulier, la présente invention concerne un support pour appareillage à rapporter sur le socle d'une goulotte à retours dirigés l'un vers l'autre, du type comportant deux traverses qui, par des moyens d'engagement, sont aptes à venir en prise avec lesdits retours, et dont chacune est équipée de moyens de fixation dudit appareillage.

En écartant l'une de l'autre les traverses, il est avantageusement possible d'adapter l'ensemble à n'importe quel entraxe de fixation parallèlement à la longueur du socle de goulotte, et, donc, parallèlement à longueur du couvercle.

Le document FR 2 776 134 décrit un support pour appareillage à rapporter sur le socle d'une goulotte à retours comportant deux côtés longitudinaux et deux côtés transversaux. Le long des côtés longitudinaux sont prévus des pattes d'encliquetage ou des moyens de fixation rattachés au support d'appareillage.

Dans certaines réalisations déjà connues, il est en outre possible, au moins dans une certaine mesure, d'adapter la longueur des traverses à la distance séparant l'une de l'autre en largeur les deux parois longitudinales concernées du socle de goulotte et donc à la largeur du couvercle.

Pour ce faire, dans ces réalisations déjà connues, chacune des traverses présente une partie centrale et à chacune de ses extrémités une ou plusieurs portions sécables, et des parties d'extrémité qui comportent des moyens d'engagement nécessaires à une venue en prise de l'ensemble avec les parois longitudinales concernées du socle de goulotte à équiper, et qui sont à rapporter, par emboîtement, à la manière d'embouts, sur les extrémités de la partie centrale.

Pour l'adaptation d'une traverse à la largeur recherchée, il suffit donc d'éliminer une ou plusieurs des portions sécables de la partie centrale de cette traverse.

Cette disposition présente cependant divers inconvénients, qui tiennent, pour l'essentiel, à la dépendance, qui existe inévitablement, entre l'adaptation de chaque traverse à la largeur du couvercle et la position finale des moyens de fixation équipant chaque traverse qui lors de la modification de la longueur de chaque traverse peuvent se trouver décentrés par rapport à une position initialement prévue sur l'axe longitudinal de symétrie de ladite goulotte.

En outre, dans certains cas, pour une longueur de traverse donnée, il s'avère nécessaire de modifier la position des moyens de fixation, équipant une traverse pour autoriser un certain décentrement de l'appareillage à fixer, par exemple lorsque cet appareillage est solidaire d'une plaque enjoliveur par rapport à laquelle il est lui-même décentré, ou par exemple dans le cas où cet appareillage présente un encombrement volumique arrière important de sorte que lorsqu'il est monté sur ledit support dans la goulotte, il prend appui contre une partie interne de la goulotte, ce qui a pour conséquence de décentrer ses moyens de fixation par rapport à une position initialement prévue sur l'axe longitudinal de symétrie de ladite goulotte.

On connaît actuellement, de la demande de brevet français No 95 13936 publiée sous le FR 2 741 755, un support pour appareillage à rapporter sur le socle d'une goulotte à retours dirigés l'un vers l'autre, qui comprend deux traverses aptes à venir en prise avec lesdits retours et dont chacune est équipée de moyens de fixation dudit appareillage, montés réglables en position le long de celle-ci, par un système complexe de coopération de crans.

Si une telle réalisation donne entièrement satisfaction dans le cas où il s'agit de permettre un réglage en position de manière continue ou sensiblement continue des moyens de fixation équipant les traverses sur une portion relativement étendue de la longueur de ces traverses, elle implique un surcoût et une complexité de réalisation et de mise en oeuvre du support d'appareillage qui ne sont pas justifiés lorsque la plage de réglage desdits moyens de fixation est particulièrement peut étendue de façon à permettre un léger décentrement desdits moyens de fixation par rapport à une position d'origine prévue.

Ainsi, par rapport à l'état de la technique précité, la présente invention propose une nouvelle disposition des traverses d'un support d'appareillage, pourvues de moyens de fixation dont la position peut être ajustée à celle des moyens de fixation d'un appareillage légèrement décentré par rapport à une position prévue initialement le long desdites traverses, qui est simple de réalisation et peu coûteuse.

Plus particulièrement, l'invention concerne un support pour appareillage du type défini en introduction, dans lequel les moyens de fixation sont rattachés à chaque traverse par l'intermédiaire d'une liaison souple autorisant un léger décalage desdits moyens de fixation selon la direction générale de la traverse par rapport à une position d'origine stable, lors de la fixation dudit appareillage sur ledit support.

Ledit décalage des moyens de fixation est réalisé par pivotement de la liaison souple dans le plan de ladite traverse.

Avantageusement, selon l'invention, la liaison souple rattachant les moyens de fixation à chaque traverse autorise un léger décentrement desdits moyens de fixation permettant à un support de longueur donnée, monté dans une goulotte, de recevoir différents appareillages par exemple composant une série, dont les encombrements sont différents, ce qui peut entraîner lors de leur montage un léger décalage de leurs moyens de fixation par rapport à une position d'origine prévue.

D'autres caractéristiques non limitatives et avantageuses du support pour appareillage selon l'invention sont énoncées ci-après.

Les moyens de fixation équipant une traverse appartiennent à un plot solidarisé à la liaison souple, ce plot pouvant porter de part et d'autre de ladite liaison souple des butées aptes à venir en appui contre une partie de chaque traverse pour limiter la course desdits moyens de fixation.

Chaque plot vient de formation avec ladite liaison souple associée, et chaque liaison souple est constituée par une languette flexible qui s'étend perpendiculairement à ladite direction générale d'une traverse, cette languette flexible pouvant venir de formation par moulage d'une matière plastique avec chaque traverse.

Le support comporte, sous la forme générale d'un cadre, quatre côtés, dont deux côtés longitudinaux présentant extérieurement, sur leur tranche, des moyens de rainure propres à l'engagement de l'ensemble sur les retours du socle de la goulotte à équiper, et deux côtés transversaux formés par lesdites traverses, lesdits côtés définissant intérieurement une ouverture centrale pour la mise en place d'au moins un appareil et étant répartis en au moins deux parties articulées l'une par rapport à l'autre par une charnière, en formant une seule et même pièce, de sorte que, pour donner latéralement accès à l'ouverture centrale, elles sont susceptibles d'être au moins localement désolidarisées l'une de l'autre.

Selon ce mode de réalisation, les côtés longitudinaux du support comprennent des longerons pourvus préférentiellement d'au moins une portion sécable pour former un orifice de passage d'un câble d'alimentation électrique d'un appareil.

La description qui va suivre, en regard des dessins annexés, donnés à titre d'exemples non limitatifs, fera bien comprendre en quoi consiste l'invention et comment elle peut être réalisée.

Sur les dessins annexés :
- la figure 1 est une vue en perspective éclatée d'un mode de réalisation préférentiel du support selon l'invention à rapporter sur le socle d'une goulotte destinée à être fermée par un premier type de couvercle de fermeture ;
- la figure 2 est une vue de dessus du support représenté sur la figure 1 positionné dans le socle de la goulotte fermée par le couvercle de fermeture ;
- la figure 3 est une vue en perspective éclatée du support selon l'invention représenté sur les figures 1 et 2 et destiné à être rapporté sur une goulotte fermée par un second type de couvercle de fermeture ;
- la figure 4 est une vue de dessus du support de la figure 3 monté dans la goulotte fermée par le couvercle de fermeture, et
- la figure 5 est une vue schématique de détail de dessus, d'une traverse du support représenté sur les figures 1 à 4.

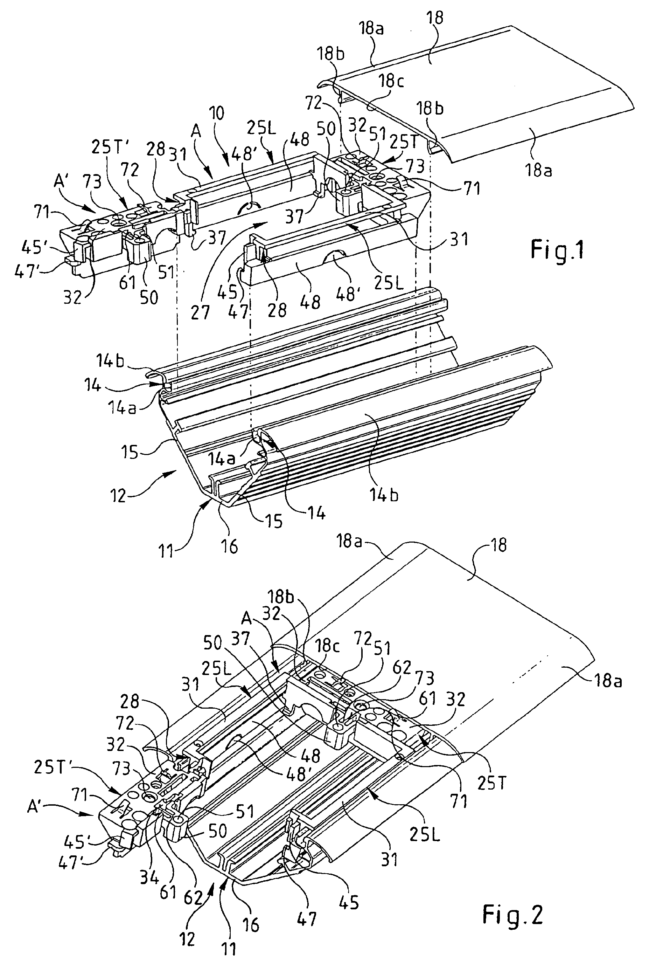

Sur les figures 1 à 4, on a représenté un support 10 d'appareillage selon l'invention destiné à permettre de rapporter, en façade, sur le socle 11 d'une goulotte 12, un quelconque appareillage (ici non représenté).

La goulotte 12 étant bien connue par elle-même, elle ne sera pas décrite dans le détail.

Pour l'essentiel, elle comporte un socle 11 qui présente deux retours 14, disposés chacun respectivement le long d'un bord libre de ses ailes latérales 15, et dirigés l'un vers l'autre.

Les retours 14 présentent ici chacun un bord courbe 14b tombant vers l'extérieur de la goulotte. Ces bords courbes 14b confèrent une certaine esthétique à ladite goulotte.

C'est à la faveur de ces retours 14 de la goulotte que le support d'appareillage 10 est lui-même rapporté sur le socle 11.

Dans la forme de réalisation représentée, le socle 11 a, en section transversale, un profil en V, avec un fond 16 à partir duquel ses ailes latérales 15 s'étendent suivant des axes divergents l'un par rapport à l'autre et ses retours 14 sont parallèles à ce fond 16.

On pourrait prévoir, en variante non représentée, que le socle, en section transversale, ait un profil en U, avec un fond perpendiculaire à ses ailes et des retours parallèles au fond.

La goulotte 12 se complète par un couvercle pour la fermeture de son socle 11.

Selon le mode de réalisation représenté sur les figures 1 et 2, le couvercle 18 comporte des bords longitudinaux 18a légèrement courbés de sorte qu'ils forment des bords tombants vers l'extérieur de la goulotte, destinés à recouvrir les bords externes courbes 14b des retours 14 de ladite goulotte.

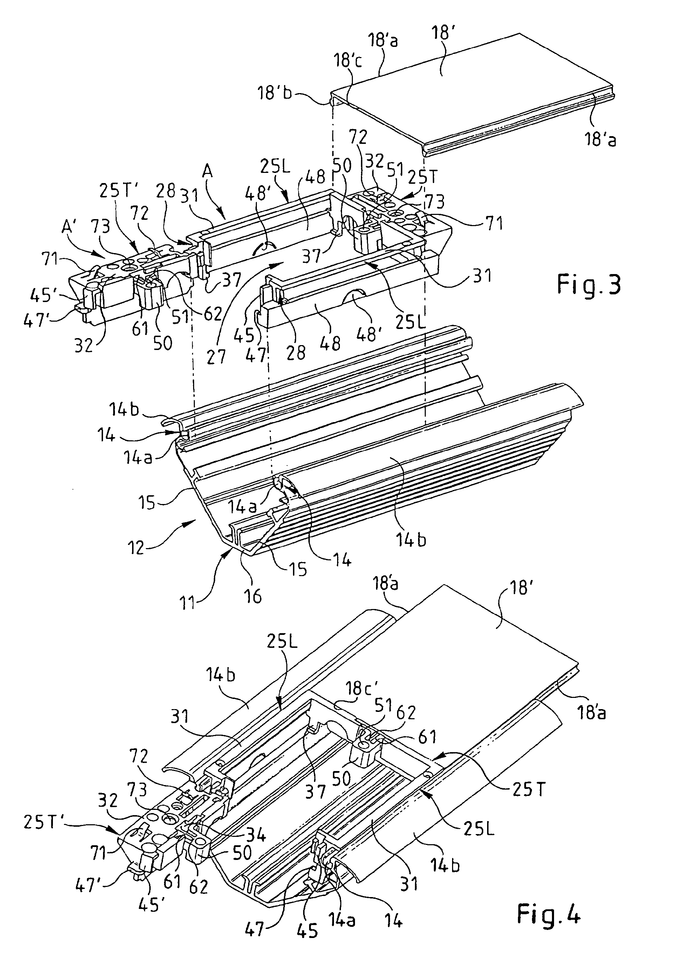

Selon le mode de réalisation représenté sur les figures 4 et 3, le couvercle 18' comporte des bords longitudinaux 18'a droits qui forment des arêtes vives longitudinales.

Comme cela est représenté plus particulièrement sur la figure 4, lorsque ce couvercle 18' est monté sur la goulotte 12, il laisse apparents les bords courbes 14a des retours 14 de ladite goulotte.

Pour l'encliquetage de chaque couvercle de fermeture 18, 18' sur la goulotte, les retours 14 de ladite goulotte sont chacun conformés en une gouttière 14a le long de leur bord libre, et chaque couvercle 18, 18' comprend deux pattes d'encliquetage 18b, 18'b positionnées parallèlement à proximité de leurs bords longitudinaux 18a, 18'a et destinées à s'enclencher par déformation élastique dans chaque gouttière 14a respective.

De manière connue en soi, le support d'appareillage 10 suivant l'invention vient, localement, en substitution, du couvercle de fermeture.

L'appareillage destiné à être monté dans le support 10 n'est pas représenté, et peut être par exemple un bloc multiprise.

Selon les exemples représentés sur les figures, le support d'appareillage 10 selon l'invention comporte, sous la forme générale d'un cadre, quatre côtés 25L, 25T, 25T', qui définissent intérieurement une ouverture centrale 27 propre à la mise en place d'au moins un appareil, et, en l'espèce, d'un seul appareil, et parmi lesquels deux côtés 25L opposés, ici les côtés longitudinaux, présentent, chacun, extérieurement, sur leur tranche, des moyens de rainure 28 propres à l'engagement de l'ensemble sur les retours 14 du socle 11 de la goulotte 12 à équiper, et, plus précisément, sur la partie conformée en gouttière 14a de ces retours 14.

Les côtés 25L, 25T, 25T' du support d'appareillage 10 sont répartis en au moins deux parties A, A', qui, pour donner latéralement accès à l'ouverture 27, sont susceptibles d'être au moins localement désolidarisées l'une de l'autre.

Les parties A, A' forment une seule et même pièce et sont ici articulées l'une par rapport à l'autre par l'intermédiaire d'une charnière 30.

Grâce à cette charnière 30, le support d'appareillage 10 est susceptible de passer d'une configuration d'ouverture, plus particulièrement représentée sur les figures 1 à 4, à une configuration de fermeture (non représentée), et pour sa configuration d'ouverture il est avantageusement donné accès latéralement à son ouverture centrale 27.

Dans la forme de réalisation représentée, l'une des parties A comporte les deux côtés longitudinaux 25L et un côté transversal constitué par une traverse 25T, et l'autre partie A' comporte un seul côté transversal constitué par une traverse 25T'.

Ce support d'appareillage 10 s'ouvre suivant la longueur du socle 11 de la goulotte 12.

Sa partie A, qui est formée des deux côtés longitudinaux 25L présentant des moyens de rainure 28 et d'une traverse 25T fixe, a, en plan, un contour en U.

Sa partie A', qui est formée d'un seul côté transversal 25T' mobile, se réduit donc à une traverse propre à fermer la partie A.

Les côtés longitudinaux 25L présentent, chacun, en saillie, sur toute leur longueur, un bandeau 31, par lequel ils sont à niveau avec les retours 14 du socle de la goulotte 12, et un longeron 48 destiné à être positionné à l'intérieur de la goulotte en regard d'une nervure longitudinale participant à la rigidification de la goulotte et s'étendant juste en dessous de la gouttière 14a d'un retour 14.

Les traverses 25T, 25T' forment, chacune, sur toute leur longueur, une languette 32 de surface rectangulaire, qui est en retrait par rapport au bandeau 31 des côtés longitudinaux 25L et par laquelle ils sont aptes à s'insérer sous les tronçons correspondants d'un couvercle de fermeture ou d'un contre-joint (non représenté) établissant la jonction entre un enjoliveur recouvrant un appareil et un couvercle de fermeture, comme cela sera décrit ultérieurement.

Chaque languette 32 des traverses 25T, 25T' s'étend transversalement en porte à faux.

Sur la surface inférieure du support 10 aux quatre coins de celui-ci, il est prévu des crochets 37 propres à permettre de lui atteler si désiré un quelconque boîtier d'isolation d'un appareillage non représenté.

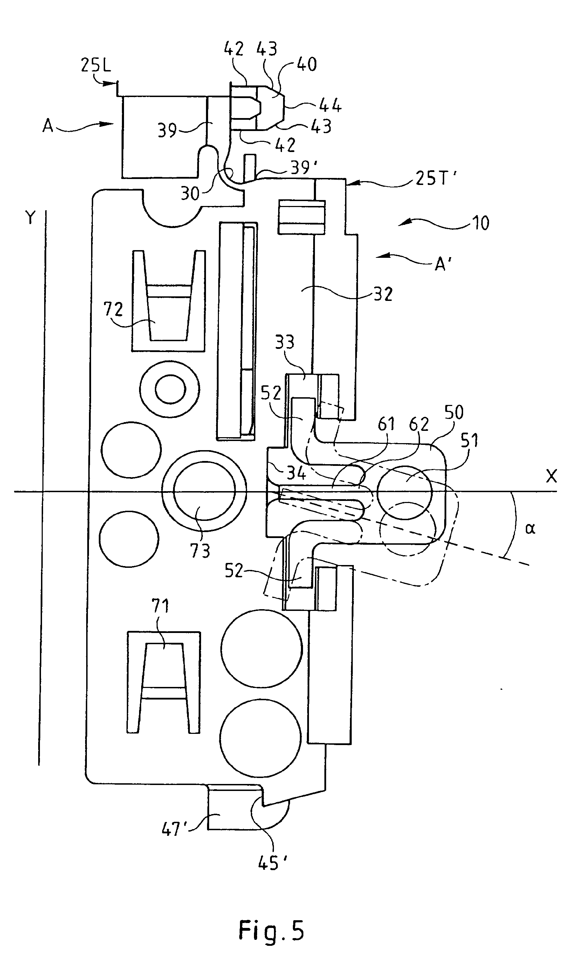

Comme le montre plus particulièrement la figure 5, selon l'exemple représenté du support d'appareillage selon l'invention, la charnière 30 intervient entre, d'une part, un bord latéral 39' de la traverse 25T' et, d'autre part, une deuxième languette 39, qui prolonge, localement, le côté longitudinal 25L auquel la traverse 25T' est articulée, en bout de ce côté longitudinal 25L.

La languette 39 est préférentiellement rigide ou semi-rigide.

Préférentiellement, il est prévu des moyens de centrage entre les deux parties A, A' au voisinage de la charnière 30.

Par exemple, tel que représenté sur la figure 5, ces moyens de centrage comportent un bossage 40, qui est présent en saillie sur la partie A et un logement (non représenté), qui est ménagé en creux sur la partie A' et au moins localement complémentaire de ce bossage 40.

Le bossage 40 qui appartient à la partie A fait saillie sur la surface interne de la languette 39 prolongeant le côté longitudinal 25L concerné par la charnière 30.

Le bossage 40 comporte, dos à dos, parallèlement à l'axe de la charnière 30, et perpendiculairement à la languette 39 qui le porte, deux facettes de centrage 42, et le logement correspondant prévu sur la partie A' présente avantageusement lui-même deux facettes de centrage.

Le bossage 40 présente également en amont de ses facettes de centrage 42, pour faciliter son engagement dans le logement correspondant, deux facettes d'engagement 43 qui, obliques l'une par rapport à l'autre, forment un dièdre aigu entre elles.

Comme représenté, le bossage 40 peut également, du côté de ce dièdre, être rabattu par un chanfrein 44, sur l'une et/ou l'autre de ses faces parallèles au plan suivant lequel s'étend d'une manière générale le support d'appareillage 10.

La charnière 30 forme, elle, localement une languette d'épaisseur moindre qui est flexible. Elle s'étend sensiblement suivant un quart de cercle.

Préférentiellement, et c'est également le cas dans la forme de réalisation représentée, des moyens d'encliquetage 45, 45' sont prévus entre les deux parties A, A' à distance de la charnière 30.

Ces moyens d'encliquetage 45, 45' interviennent, entre, d'une part, l'extrémité opposée à la charnière 30 de la traverse 25T' articulée et, d'autre part, l'extrémité libre du côté longitudinal 25L correspondant.

Plus particulièrement, il est prévu sur l'extrémité concernée de la traverse 25T' un cran 45' qui fait saillie du bord latéral de cette traverse, et sur l'extrémité libre du côté longitudinal 25L correspondant un cran complémentaire 45.

Avantageusement, il est également prévu des moyens de guidage de la traverse articulée 25T' lors de son encliquetage sur le côté longitudinal 25L correspondant.

Ces moyens de guidage interviennent entre lesdites extrémités de ladite traverse et du côté longitudinal correspondant.

Ils comprennent, d'une part, une rampe 47' arrondie formée sur ladite traverse 25T' juste en dessous du cran d'encliquetage 45' et, d'autre part, une rainure 47 formée à l'extrémité libre correspondante dudit côté longitudinal 25L, et destinée à accueillir ladite rampe 47' en vue de l'encliquetage desdits moyens d'encliquetage.

Comme le montre plus particulièrement les figures 1 à 4, les longerons 48 des côtés longitudinaux 25L du support 10 comprennent ici chacun une portion sécable 48' en forme de portion de disque de plus faible épaisseur que celle des longerons et rattachée à chaque longeron par des tétons de même épaisseur. Chaque portion sécable permet de former un orifice de passage de câbles d'alimentation électrique d'un appareil introduit dans ladite ouverture centrale 27.

Avantageusement, chaque traverse du support 10 représenté est équipée de moyens de fixation 51 dudit appareillage.

Ces moyens de fixation 51 sont rattachés à chaque traverse 25T, 25T' par l'intermédiaire d'une liaison souple autorisant un léger décalage desdits moyens de fixation selon la direction générale Y de la traverse par rapport à une position d'origine stable (représentée en trait plein sur la figure 5) lors de la fixation dudit appareillage sur ledit support.

Plus particulièrement, comme cela est représenté sur la figure 5, ledit décalage des moyens de fixation est réalisé par pivotement de la liaison souple 61 dans le plan X, Y de ladite traverse 25T' (la position décalée étant représentée en traits pointillés sur la figure 5).

Cette liaison souple est ici constituée par une languette flexible 61 qui s'étend perpendiculairement à la direction générale Y de la traverse 25T'. Elle vient de formation par moulage d'une matière plastique avec chaque traverse.

Chaque languette flexible 61 est positionnée dans un renfoncement 34 formé dans chaque traverse 25T, 25T' de sorte qu'elle ne déborde pas du bord longitudinal externe de ladite traverse.

En outre, les moyens de fixation 51 équipant une traverse 25T' appartiennent à un plot 50 solidarisé à ladite liaison souple 61.

Ici, de façon avantageuse, chaque plot 50 vient de formation avec la languette flexible 61 associée constituant ladite liaison souple, de sorte qu'il se trouve placé à une extrémité 62 de la languette 61, en saillie de la traverse, vers l'intérieur du support 10.

Chaque plot 50 porte de part et d'autre de ladite liaison souple 61 des butées 52 qui s'étendent selon la direction générale Y dans un logement 33 prévu dans la traverse 25T'.

Ces butées 52 sont aptes à venir en appui contre une partie de chaque traverse 25T' pour limiter la course desdits moyens de fixation.

Le débattement α angulaire du plot 50 est fixé de manière à permettre un décalage des moyens de fixation 51 selon la direction générale Y de la traverse, de l'ordre de ± 3 mm par exemple.

Les butées 52 limiteurs de la course des moyens de fixation permettent de protéger chaque languette flexible 61 de sorte qu'elle se déforme toujours élastiquement.

Les moyens de fixation 51 équipant chaque traverse 25T, 25T' comprennent avantageusement un insert taraudé (ici non représenté) emmanché dans un logement prévu dans ledit plot 50.

Ainsi, lorsqu'un appareil, dont la largeur d'un demi-mécanisme est supérieure de quelques millimètres à la moitié de la largeur de l'ouverture 27 disponible dans le support, est engagé dans ledit support, il vient du côté de ce demi-mécanisme en appui contre un longeron du support ou contre une gouttière du socle de la goulotte, ce qui provoque un léger décentrement de ses moyens de fixation.

Pour le fixer au support, il suffit alors de décentrer les moyens de fixation 51 équipant les traverses 25T, 25T', par fléchissement des languettes flexibles 61, de façon à faire coïncider lesdits moyens de fixation du support 10 avec ceux de l'appareil.

Les moyens de fixation liés aux traverses du support 10 restent ainsi en position du fait que l'appareil (non représenté) est en appui contre le support ou contre la goulotte.

Lorsque l'on démonte l'appareil en question, les moyens de fixation des traverses du support reviennent dans leur position d'origine stable selon l'axe X (représenté sur la figure 5) par retour élastique.

Par ailleurs, avantageusement, chaque traverse 25T, 25T' comporte au moins un doigt qui fait saillie de la surface externe de ladite traverse 25T, 25T' pour former une butée de positionnement du couvercle de fermeture 18 représenté sur les figures 1 et 2 de la goulotte 12.

Ici, chaque traverse 25T, 25T' est pourvue de deux doigts 71, 72 positionnés symétriquement par rapport à l'axe médian transversal X de ladite traverse.

En effet, dans le mode de réalisation représenté sur les figures 1 et 2, le couvercle 18 comportant des bords longitudinaux 18a recouvrant les bords longitudinaux courbes de la goulotte, doit être positionné avec son bord transversal coupé 18c placé à une certaine distance du support 10 destiné à accueillir l'appareil.

Cette distance est fixée par les doigts 71, 72 prévus sur chaque traverse, dont la largeur est déterminée de manière à permettre l'encliquetage d'un contre-joint sur la traverse, ce contre-joint non représenté recouvrant la partie de chaque traverse portant lesdits doigts et formant la jonction entre un enjoliveur (non représenté) positionné sur l'appareil placé dans le support 10 et le couvercle de fermeture 18 de la goulotte.

Avantageusement, chacun des doigts 71, 72 prévus sur chaque traverse est escamotable à l'intérieur de ladite traverse, de façon à autoriser le positionnement d'un couvercle de fermeture 18' tel que représenté sur les figures 3 et 4, qui recouvre la totalité d'une traverse, avec son bord transversal coupé 18'c positionné de manière adjacente aux moyens de fixation de l'appareil équipant ladite traverse.

Chaque doigt est constitué d'une languette élastique qui vient de formation par moulage avec chaque traverse.

Enfin, chaque traverse comporte un orifice central 73 permettant le montage d'un contre-joint formant la jonction entre un enjoliveur et un couvercle de fermeture.

La présente invention n'est nullement limitée au mode de réalisation décrit et représenté mais l'homme du métier saura y apporter toute variante conforme à son esprit.

En particulier, on pourra prévoir que le support d'appareillage selon l'invention comporte uniquement deux traverses adaptées à venir en prise avec l'une ou l'autre des parois longitudinales concernées du socle de la goulotte.

Ces traverses peuvent alors être écartées l'une de l'autre pour adapter l'ensemble à n'importe quel entraxe de fixation parallèlement à la longueur du socle de la goulotte et donc parallèlement à la longueur du couvercle.

Dans ce cas, dans le cadre de l'invention, avantageusement, ces traverses formant support pour appareillage peuvent présenter des extrémités constituées d'une ou plusieurs portions sécables de façon à pouvoir s'adapter à différentes largeurs de goulotte.

En outre, selon une autre variante de l'invention, il peut être prévu un seul doigt de butée de positionnement sur chaque traverse qui est non escamotable et permet uniquement de positionner un couvercle par rapport à un enjoliveur destiné à recouvrir un appareil positionné dans le support.

La traverse portant sa butée non escamotable pourrait alors être recouverte par un contre-joint comportant intérieurement un logement de réception dudit doigt faisant saillie de la surface externe de chaque traverse.

## Revendications

1. Support (10) pour appareillage, en particulier pour appareillage électrique, à rapporter sur le socle (11) d'une goulotte à retours (14) dirigés l'un vers l'autre, du type comportant deux traverses (25T, 25T') qui, par des moyens d'engagement, sont aptes à venir en prise avec lesdits retours, et dont chacune est équipée de moyens de fixation (51) dudit appareillage, **caractérisé en ce que** les moyens de fixation sont rattachés à chaque traverse (25T, 25T') par l'intermédiaire d'une liaison souple (61) autorisant un léger décalage desdits moyens de fixation selon la direction générale (Y) de la traverse par rapport à une position d'origine stable, lors de la fixation dudit appareillage sur ledit support, ledit décalage des moyens de fixation (51) étant réalisé par pivotement de la liaison souple (61) dans le plan (X, Y) de ladite traverse (25T').

2. Support selon la revendication 1, **caractérisé en ce que** les moyens de fixation (51) équipant une traverse (25T') appartiennent à un plot (50) solidarisé à ladite liaison souple (61).

3. Support selon la revendication 2, **caractérisé en ce que** chaque plot (50) porte de part et d'autre de ladite liaison souple (61) des butées (52) aptes à venir en appui contre une partie de chaque traverse (25T') pour limiter la course desdits moyens de fixation (51).

4. Support selon l'une des revendications 2 ou 3, **caractérisé en ce que** chaque plot (50) vient de formation avec ladite liaison souple (61) associée.

5. Support selon l'une des revendications 1 à 4, **caractérisé en ce que** chaque liaison souple est constituée par une languette flexible (61) qui s'étend perpendiculairement à la direction générale (Y) d'une traverse (25T').

6. Support selon la revendication 5, **caractérisé en ce que** chaque languette flexible (61) vient de formation par moulage d'une matière plastique avec chaque traverse (25T').

7. Support selon l'une des revendications 2 à 5, **caractérisé en ce que** les moyens de fixation (51) équipant une traverse (25T') comprennent un insert taraudé emmanché dans un logement prévu dans ledit plot (50).

8. Support (10) selon l'une des revendications précédentes, **caractérisé en ce qu'**il comporte, sous la forme générale d'un cadre, quatre côtés, dont deux côtés longitudinaux (25L) présentant extérieurement, sur leur tranche des moyens de rainure (28) propres à l'engagement de l'ensemble sur les retours (14) du socle (11) de la goulotte (12) à équiper, et deux côtés transversaux (25T, 25T') formés par lesdites traverses, lesdits côtés (25L, 25T, 25T') définissant intérieurement une ouverture centrale (27) pour la mise en place d'au moins un appareil et étant répartis en au moins deux parties (A, A') articulées l'une par rapport à l'autre par une charnière (30), en formant une seule et même pièce, de sorte que, pour donner latéralement accès à l'ouverture centrale (27), elles sont susceptibles d'être au moins localement désolidarisées l'une de l'autre.

9. Support (10) selon la revendication 8, **caractérisé en ce que** l'une (A) des parties comporte trois côtés et l'autre (A') comporte une traverse.

10. Support (10) selon l'une des revendications 8 ou 9, **caractérisé en ce que** la charnière (30) intervient entre un bord (39') d'une traverse (25T') et une languette (39) qui prolonge localement le côté longitudinal auquel cette traverse (25T') est articulée.

11. Support selon l'une des revendications 8 à 10, **caractérisé en ce que** des moyens de centrage sont prévus entre les deux parties (A, A') au voisinage de la charnière.

12. Support selon la revendication 11, **caractérisé en ce que** lesdits moyens de centrage comportent un bossage (40) qui est présent en saillie sur l'une (A) des parties et un logement qui est ménagé en creux sur l'autre partie (A') de manière complémentaire de ce bossage.

13. Support selon l'une des revendications 8 à 12, **caractérisé en ce que** des moyens d'encliquetage (45', 45) interviennent entre, d'une part, l'extrémité opposée à la charnière de la traverse (25T') articulée et, d'autre part, l'extrémité libre du côté longitudinal correspondant.

14. Support selon la revendication 13, **caractérisé en ce que** lesdits moyens d'encliquetage comprennent deux crans (45, 45') qui coopèrent l'un avec l'autre.

15. Support selon l'une des revendications 13 ou 14, **caractérisé en ce que** des moyens de guidage (47, 47') interviennent entre lesdites extrémités de ladite traverse (25T') et du côté longitudinal (25L) correspondant portant lesdits moyens d'encliquetage (45', 45), pour les guider lors de l'encliquetage.

16. Support (10) selon la revendication 15, **caractérisé en ce que** les moyens de guidage comprennent d'une part une rampe (47') arrondie formée sur ladite traverse (25T') et une rainure (47) formée à l'extrémité dudit côté longitudinal correspondant, et destinée à accueillir ladite rampe (47') en vue de l'encliquetage desdits moyens d'encliquetage.

17. Support selon l'une des revendications 8 à 16, **caractérisé en ce que** les côtés longitudinaux (25L) comprennent des longerons (48) pourvus d'au moins une portion sécable (48') pour former un orifice de passage de câbles d'alimentation électrique d'un appareil.

18. Support selon l'une quelconque des revendications précédentes, **caractérisé en ce que** chaque traverse (25T, 25T') comporte au moins un doigt (71, 72) qui fait saillie de la surface externe de ladite traverse (25T, 25T') pour former une butée de positionnement d'un couvercle de fermeture (18, 18') de la goulotte.

19. Support selon la revendication 18, **caractérisé en ce que** chaque doigt (71, 72) est escamotable à l'intérieur de ladite traverse.

20. Support selon l'une des revendications 18 ou 19, **caractérisé en ce que** chaque doigt (71, 72) est constitué d'une languette élastique qui vient de formation avec chaque traverse.

21. Support selon l'une des revendications 18 à 20, **caractérisé en ce que** chaque traverse (25T, 25T') comprend deux doigts (71, 72) positionnés symétriquement par rapport à l'axe médian transversal de ladite traverse.

22. Support selon l'une des revendications 1 à 21, **caractérisé en ce que** chaque traverse (25T, 25T') comporte un orifice de montage (73) d'un contre-joint formant la jonction entre un enjoliveur positionné sur l'appareil et un couvercle de fermeture de la goulotte.

## Claims

1. A support (10) for apparatus, in particular for electrical apparatus, to be mounted to the base (11) of trunking with rims (14) directed towards each other, of the type comprising two crossmembers (25T, 25T') which are adapted to come into engagement with said rims by engagement means, and which are each equipped with fastening means (51) for fastening said apparatus, **characterized in that** the fastening means are attached to each crossmember (25T, 25T') by a flexible connection (61) enabling a slight offset of said fastening means in the general direction (Y) of the crossmember relative to a stable original position, when fastening said apparatus to said support, said offset of the fastening means (51) being made by pivoting of the flexible connection (61) in the plane (X, Y) of said crossmember (25T').

2. The support according to claim 1, **characterized in that** the fastening means (51) equipping a crossmember (25T') belong to a stud (50) fastened to said flexible connection (61).

3. The support according to claim 2, **characterized in that** each stud (50) carries abutments (52) on respective opposite sides of said flexible connection (61) which are adapted to bear against a portion of each crossmember (25T') to limit the travel of said fastening means (51).

4. The support according to one of claims 2 or 3, **characterized in that** each stud (50) is formed in one piece with said associated flexible connection (61).

5. The support according to one of claims 1 to 4, **characterized in that** each flexible connection is constituted by a flexible tongue (61) which extends perpendicular to the general direction (Y) of a crossmember (25T').

6. The support according to claim 5, **characterized in that** each flexible tongue (61) is molded in one piece with each crossmember (25T') from a plastics material.

7. The support according to one of claims 2 to 5, **characterized in that** the fastening means (51) equipping a crossmember (25T') comprise a tapped insert inserted into an accommodation provided in said stud (50)

8. The support (10) according to one of the preceding claims, **characterized in that** it comprises, in the general form of a frame, four sides, two of which are longitudinal sides (25L) having on the outside, on their edge surface, groove means (28) adapted for the engagement of the group on the rims (14) of the base (11) of the trunking (12) to be equipped, and two transverse sides (25T, 25T') formed by said crossmembers, said sides (25L, 25T, 25T') defining internally a central opening (27) for fitting at least one apparatus and being divided into at least two parts (A, A') hinged together by a hinge (30), while forming a single piece, so that said parts can be at least locally detached from each other to provide lateral access to the central opening (27).

9. The support (10) according to claim 8, **characterized in that** one of the parts (A) comprises three sides and the other (A') comprises a crossmember.

10. The support (10) according to one of claims 8 or 9, **characterized in that** the hinge (30) is operative between an edge (39') of a crossmember (25T') and a tongue (39) which locally extends the longitudinal side to which said crossmember (25T') is hinged.

11. The support according to one of claims 8 to 10, **characterized in that** centering means are provided between the two parts (A, A') in the vicinity of the hinge.

12. The support according to claim 11, **characterized in that** said centering means comprise a projection (40) projecting from one (A) of the parts and an accommodation which is provided recessed on the other part (A') so as to be complementary to that projection.

13. The support according to one of claims 8 to 12, **characterized in that** latching means (45', 45) are operative between the opposite end of the hinged crossmember (25T') to said hinge and the free end of the corresponding longitudinal side.

14. The support according to claim 13, **characterized in that** said latching means comprise two detents (45, 45') which co-operate with each other.

15. The support according to one of claims 13 or 14, **characterized in that** guide means (47, 47') are operative between said ends of said crossmember (25T') and the corresponding longitudinal side (25L) carrying said latching means (45, 45'), for guiding them during latching.

16. The support (10) according to claim 15, **characterized in that** the guide means comprise a rounded ramp (47') formed on said crossmember (25T') and a groove (47) formed at the end of said corresponding longitudinal side, and adapted to receive said ramp (47') for the latching of said latching means.

17. The support according to one of claims 8 to 16, **characterized in that** the longitudinal sides (25L) comprise longitudinal members (48) provided with at least one portion (48') which can be separated to form an aperture for passage of electrical supply cables of an apparatus.

18. The support according to any one of the preceding claims **characterized in that** each crossmember (25T, 25T') comprises at least one finger (71, 72) which projects from the outside surface of said crossmember (25T, 25T') to form an abutment for locating a cover (18, 18') for closure of the trunking.

19. The support according to claim 18, **characterized in that** each finger (71, 72) is retractable inside said crossmember.

20. The support according to one of claims 18 or 19, **characterized in that** each finger (71, 72) is constituted by an elastic tongue which is formed in one piece with each crossmember.

21. The support according to one of claims 18 to 20, **characterized in that** each cross member (25T, 25T') comprises two fingers (71, 72) positioned symmetrically relative to the transverse median axis of said crossmember.

22. The support according to one of claim 1 to 21, **characterized in that** each crossmember (25T, 25T') comprises an aperture for mounting (73) a joint-cover forming the junction between an embellisher positioned on the apparatus and a cover for closure of the trunking.

## Patentansprüche

1. Träger (10) für Installationsgeräte, insbesondere für Elektro-Installationsgeräte, der auf den Sockel (11) eines Kabelkanals mit einander zugewandten Rücksprüngen (14) aufsetzbar ist, des Typs mit zwei Querträgern (25T, 25T'), die mit den Rücksprüngen durch Eingriffsmittel in Eingriff gelangen können und die jeweils mit Mitteln (51) zum Befestigen der Installationsgeräte versehen sind,
**dadurch gekennzeichnet, dass** die Befestigungsmittel an jedem Querträger (25T, 25T') mittels einer elastischen Verbindung (61) befestigt sind, die beim Befestigen der Installationsgeräte auf dem Träger eine geringe Verlagerung der Befestigungsmittel in der allgemeinen Richtung (Y) des Querträgers in Bezug auf eine stabile Ausgangsstellung zulässt, wobei die Verlagerung der Befestigungsmittel (51) durch Schwenken der elastischen Verbindung (61) in der Ebene (X, Y) des Querträgers (25T') erfolgt.

2. Träger nach Anspruch 1,
**dadurch gekennzeichnet, dass** die Befestigungsmittel (51), mit denen ein Querträger (25T') versehen ist, einem Stift (50) zugehörig sind, der mit der elastischen Verbindung (61) fest verbunden ist.

3. Träger nach Anspruch 2,
**dadurch gekennzeichnet, dass** jeder Stift (50) beidseits der elastischen Verbindung (61) mit Anschlägen (52) versehen ist, die gegen einen Teil eines jeden Querträgers (25T') in Anlage gelangen können, um den Weg der Befestigungsmittel (51) zu begrenzen.

4. Träger nach einem der Ansprüche 2 oder 3,
**dadurch gekennzeichnet, dass** jeder Stift (50) mit der zugeordneten elastischen Verbindung (61) einstückig angeformt ist.

5. Träger nach einem der Ansprüche 1 bis 4,
**dadurch gekennzeichnet, dass** jede elastische Verbindung von einer flexiblen Lasche (61) gebildet ist, die sich senkrecht zur allgemeinen Richtung (Y) eines Querträgers (25T') erstreckt.

6. Träger nach Anspruch 5,
**dadurch gekennzeichnet, dass** jede flexible Lasche (61) durch Gießen eines Kunststoffs mit jedem Querträger (25T') einstückig angeformt ist.

7. Träger nach einem der Ansprüche 2 bis 5,
**dadurch gekennzeichnet, dass** die Befestigungsmittel (51), mit denen ein Querträger (25T') versehen ist, einen Gewindeeinsatz umfassen, der in eine in dem Stift (50) vorgesehene Aufnahme eingesteckt ist.

8. Träger (10) nach einem der vorhergehenden Ansprüche,
**dadurch gekennzeichnet, dass** er in der allgemeinen Form eines Rahmens vier Seiten umfasst, von denen zwei Längsseiten (25L) außen auf ihren Rändern Kerbmittel (28) aufweisen, die zum Aufstecken des Ganzen auf die Rücksprünge (14) des Sockels (11) des zu bestückenden Kabelkanals (12) geeignet sind, und zwei Querseiten (25T, 25T') von den Querträgern gebildet sind, wobei die Seiten (25L, 25T, 25T') innen eine mittige Öffnung (27) zum Einsetzen wenigstens eines Installationsgerätes bilden und auf wenigstens zwei Teile (A, A') verteilt sind, die durch ein Scharnier (30) bezüglich einander gelenkig verbunden sind, dabei jedoch ein einziges Stück bilden, derart, dass sie wenigstens stellenweise voneinander gelöst werden können, um seitlich Zugang zu der mittigen Öffnung (27) zu gewähren.

9. Träger (10) nach Anspruch 8,
**dadurch gekennzeichnet, dass** eines (A) der Teile drei Seiten umfasst und das andere (A') einen Querträger.

10. Träger (10) nach einem der Ansprüche 8 oder 9,
**dadurch gekennzeichnet, dass** das Scharnier (30) zwischen einem Rand (39') eines Querträgers (25T') und einer Lasche (39) angeordnet ist, die lokal die Längsseite, an der der Querträger (25T') angelenkt ist, verlängert.

11. Träger nach einem der Ansprüche 8 bis 10,
**dadurch gekennzeichnet, dass** zwischen den beiden Teilen (A, A') in der Nähe des Scharniers Zentriermittel vorgesehen sind.

12. Träger nach Anspruch 11,
**dadurch gekennzeichnet, dass** die Zentriermittel eine Vorwölbung (40), die auf einem (A) der Teile vorstehend vorhanden ist, und eine Aufnahme, die auf dem anderen Teil (A') komplementär zu der Vorwölbung vertieft ausgebildet ist, aufweisen.

13. Träger nach einem der Ansprüche 8 bis 12,
**dadurch gekennzeichnet, dass** Rastmittel (45', 45) zwischen dem dem Scharnier des angelenkten Querträgers (25T') entgegengesetzten Ende einerseits und dem freien Ende der entsprechenden Längsseite andererseits angeordnet sind.

14. Träger nach Anspruch 13,
**dadurch gekennzeichnet, dass** die Rastmittel zwei Rasthaken (45, 45') umfassen, die miteinander zusammenwirken.

15. Träger nach einem der Ansprüche 13 oder 14,
**dadurch gekennzeichnet, dass** zwischen den Enden des Querträgers (25T') und der entsprechenden Längsseite (25L), die mit den Rastmitteln (45', 45) versehen ist, Führungsmittel (47, 47') angeordnet sind, um diese während des Einrastens zu führen.

16. Träger (10) nach Anspruch 15,
**dadurch gekennzeichnet, dass** die Führungsmittel zum einen eine auf dem Querträger (25T') ausgebildete abgerundete Schräge (47') und eine Nut (47) umfassen, die am Ende der entsprechenden Längsseite ausgebildet und dazu bestimmt ist, die Schräge (47') zum Einrasten der Rastmittel aufzunehmen.

17. Träger nach einem der Ansprüche 8 bis 16,
**dadurch gekennzeichnet, dass** die Längsseiten (25L) Längsträger (48) aufweisen, die mit wenigstens einem abtrennbaren Abschnitt (48') zum Bilden einer Öffnung zum Hindurchführen von Kabeln zur elektrischen Versorgung eines Installationsgerätes versehen sind.

18. Träger nach einem der vorhergehenden Ansprüche,
**dadurch gekennzeichnet, dass** jeder Querträger (25T, 25T') wenigstens einen Finger (71, 72) aufweist, der an der Außenseite des Querträgers (25T, 25T') vorsteht, um einen Anschlag zum Positionieren eines Deckels (18, 18') zum Verschließen des Kabelkanals zu bilden.

19. Träger nach Anspruch 18,
**dadurch gekennzeichnet, dass** jeder Finger (71, 72) innen in den Querträger versenkbar ist.

20. Träger nach einem der Ansprüche 18 oder 19,
**dadurch gekennzeichnet, dass** jeder Finger (71, 72) von einer elastischen Lasche gebildet ist, die mit jedem Querträger einstückig angeformt ist.

21. Träger nach einem der Ansprüche 18 bis 20,
**dadurch gekennzeichnet, dass** jeder Querträger (25T, 25T') zwei Finger (71, 72) umfasst, die bezüglich der mittleren Querachse des Querträgers symmetrisch angeordnet sind.

22. Träger nach einem der Ansprüche 1 bis 21,
**dadurch gekennzeichnet, dass** jeder Querträger (25T, 25T') eine Öffnung (73) zur Montage einer Deckleiste aufweist, die die Verbindung zwischen einer auf dem Installationsgerät platzierten Kappe und einem Verschlussdeckel des Kabelkanals herstellt.
